# EUROPÄISCHE PATENTANMELDUNG

(11) **EP 4 625 886 A1**
(43) Veröffentlichungstag der Anmeldung: **01.10.2025**
(21) Anmeldenummer: 24167377.1
(22) Anmeldetag: 28.03.2024
(51) Int. Cl.: H04L 9/40, H04L 12/46, G06F 21/56

(54) **STEUERGERÄT, NETZWERK UND ÜBERTRAGEN VON DATEN VON EINEM STEUERGERÄT IN EIN NETZWERK**

(71) Anmelder: Siemens Aktiengesellschaft, 80333 München (DE)
(72) Erfinder: Becker, Stefan, 91325 Adelsdorf (DE); Falk, Rainer, 85435 Erding (DE); Feist, Christian Peter, 80689 München (DE); Haasch, Axel, 91056 Erlangen (DE); Seeger, Guido, 91083 Baiersdorf (DE)
(74) Vertreter: Siemens Patent Attorneys

(57) **Zusammenfassung**

Die Erfindung betrifft ein Steuergerät (1), ein Netzwerk mit mehreren derartigen Steuergeräten (1) und ein Verfahren zum Übertragen von Daten von einem Steuergerät (1) in ein Netzwerk (33). Das Steuergerät (1) umfasst eine Netzwerkschnittstelle (13), die eingerichtet ist, eine Netzwerkkommunikation des Steuergerätes (1) mit einem Netzwerk (33) durchzuführen, eine Überwachungseinheit (15), die eingerichtet ist, eine Integrität des Steuergerätes (1) zu überwachen, und eine Resilienzeinheit (17), die eingerichtet ist, im Fall, dass von der Überwachungseinheit (15) eine Verletzung der Integrität des Steuergerätes (1) erkannt wird, zumindest einen Teil von dem Steuergerät (1) über die Netzwerkschnittstelle (13) in das Netzwerk (33) zu sendender Daten gemäß einem Tunnelprotokoll zur Übertragung über einen Resilienztunnel (43) zu kapseln, bevor die gekapselten Daten über den Resilienztunnel (43) in das Netzwerk (33) gesendet werden.

## Beschreibung

Die Erfindung betrifft ein Steuergerät, ein Netzwerk und ein Verfahren zum Übertragen von Daten von einem Steuergerät in ein Netzwerk.

Unter einem Steuergerät wird hier vornehmlich ein Gerät verstanden, das zur automatischen Steuerung und/oder Regelung von Maschinen, Anlagen und technischen Prozessen eingerichtet ist. Steuergeräte sind beispielsweise Automatisierungsgeräte, industrielle loT-Geräte (loT: Internet of Things, deutsch: Internet der Dinge) und speicherprogrammierbare Steuerungen (englisch: Programmable Logic Controller). Der Begriff "Steuergerät" wird hier weit gefasst und umfasst beispielsweise auch mobile Endgeräte wie mobile Bediengeräte, Smartphones und Tablet-Computer.

Generell besteht die Gefahr, dass ein Steuergerät eine Schwachstelle aufweist, die von einem Angreifer aktiv ausgenutzt wird. Dadurch kann das Steuergerät manipuliert werden und eine unerwünschte Schadfunktion realisieren. Ein Steuergerät ist oft an ein Netzwerk angebunden, über das Steuergeräte miteinander und/oder mit einem übergeordneten System kommunizieren können. Durch die Netzwerkanbindung eines Steuergerätes besteht die Gefahr, dass sich ein Angriff auf das Steuergerät über das Netzwerk ausbreitet, so dass auch andere Geräte in dem Netzwerk oder übergeordnete Systeme angegriffen oder bei DoS-Angriffen (DoS: Denial of Service) überlastet werden, oder es kann ein Schaden in der realen Welt über mit dem Steuergerät verbundene Aktuatoren verursacht werden.

Es besteht daher ein Bedarf, ein als angegriffen oder manipuliert erkanntes Steuergerät verlässlich derart einzuschränken, dass keine oder nur eine geringe Gefährdung von dem Steuergerät ausgeht. Ferner kann es nützlich sein, ein Wiederherstellen eines integren Zustands eines als angegriffen oder manipuliert erkannten Steuergerätes aus der Ferne über eine Kommunikationsverbindung soweit möglich zu unterstützen, um einen Zugriff auf das Steuergerät aus der Ferne und damit mit geringem Aufwand durchzuführen. Dies kann beispielsweise bei in Kraftwerken, Wasseraufbereitungsanlagen oder Windkraftanlagen eingesetzten Steuergeräten vorteilhaft sein, bei denen kein Bedienpersonal vor Ort vorhanden ist.

Der Erfindung liegt die Aufgabe zugrunde, ein Steuergerät und ein Verfahren zum Übertragen von Daten von einem Steuergerät in ein Netzwerk anzugeben, die hinsichtlich der Reaktion auf einen Angriff oder eine Manipulation des Steuergerätes verbessert sind.

Die Aufgabe wird erfindungsgemäß durch ein Steuergerät mit den Merkmalen des Anspruchs 1, ein Netzwerk mit den Merkmalen des Anspruchs 9 und ein Verfahren mit den Merkmalen des Anspruchs 10 gelöst.

Vorteilhafte Ausgestaltungen der Erfindung sind Gegenstand der Unteransprüche.

Ein erfindungsgemäßes Steuergerät umfasst
- eine Netzwerkschnittstelle, die eingerichtet ist, eine Netzwerkkommunikation des Steuergerätes mit einem Netzwerk durchzuführen,
- eine Überwachungseinheit, die eingerichtet ist, eine Integrität des Steuergerätes zu überwachen, und
- eine Resilienzeinheit, die eingerichtet ist, im Fall, dass von der Überwachungseinheit eine Verletzung der Integrität des Steuergerätes erkannt wird, zumindest einen Teil von dem Steuergerät über die Netzwerkschnittstelle in das Netzwerk zu sendender Daten (Netzwerkpakete) gemäß einem Tunnelprotokoll zur Übertragung über einen Resilienztunnel zu kapseln, bevor die gekapselten Daten über den Resilienztunnel in das Netzwerk gesendet werden.

Mit anderen Worten wird ein erfindungsgemäßes Steuergerät von seiner Resilienzeinheit in einen Resilienz-Betriebsmodus versetzt, wenn von der Überwachungseinheit des Steuergerätes eine Verletzung der Integrität des Steuergerätes erkannt wird. In dem Resilienz-Betriebsmodus wird eine Kommunikation des Steuergerätes mit einem Netzwerk eingeschränkt, indem zumindest ein Teil der Kommunikation des Steuergerätes mit dem Netzwerk über einen Resilienztunnel geführt wird. Dadurch wird ein so genanntes "lateral movement" verhindert oder zumindest erschwert, bei dem sich ein Angriff auf das Steuergerät über das Netzwerk auf andere Geräte in dem Netzwerk ausbreitet. Insbesondere wird verhindert oder zumindest erschwert, dass auf dem Steuergerät ausgeführte und möglicherweise manipulierte Software auf andere Geräte in dem Netzwerk zugreift. Gleichzeitig wird jedoch ermöglicht, Maßnahmen zu einer Wiederherstellung der Integrität des Steuergerätes aus der Ferne durchzuführen, da eine Kommunikation mit dem Steuergerät über den Resilienztunnel weiterhin möglich ist.

Eine Ausgestaltung eines erfindungsgemäßen Steuergerätes weist einen Hauptprozessor auf und die von der Resilienzeinheit gekapselten Daten umfassen zumindest alle über die Netzwerkschnittstelle in das Netzwerk zu sendenden Daten, die von durch den Hauptprozessor ausgeführter Software erzeugt werden. Unter dem Hauptprozessor wird in der Regel der leistungsstärkste und die Funktion des Steuergerätes hauptsächlich steuernde Prozessor des Steuergerätes verstanden. Der Hauptprozessor kann Unterprozessoren, insbesondere mehrere Prozessorkerne, aufweisen. Das Steuergerät kann neben dem Hauptprozessor weitere Prozessoren, insbesondere Koprozessoren, aufweisen. Die Kapselung der Netzwerkkommunikation, die von auf die von durch den Hauptprozessor ausgeführter Software erzeugt wird, in dem Resilienztunnel berücksichtigt, dass von Angreifern bevorzugt der Hauptprozessor eines Steuergerätes beziehungsweise durch den Hauptprozessor ausgeführte Software angegriffen wird.

Bei einer weiteren Ausgestaltung eines erfindungsgemäßen Steuergerätes ist die Resilienzeinheit eingerichtet, zu veranlassen, dass die gekapselten Daten anders kodiert werden als Daten, die von dem Steuergerät über die Netzwerkschnittstelle in das Netzwerk gesendet werden, wenn von der Überwachungseinheit keine Verletzung der Integrität des Steuergerätes erkannt wird. Mit anderen Worten werden in dem Resilienz-Betriebsmodus des Steuergerätes die über den Resilienztunnel gesendeten Daten anders kodiert als Daten, die in dem normalen Betriebsmodus des Steuergerätes in das Netzwerk gesendet werden. Dies hat den Vorteil, dass die über den Resilienztunnel übertragenen Daten von anderen Geräten in dem Netzwerk, die für diese spezielle Datenkodierung nicht ausgelegt sind, nicht als gültig akzeptiert werden. Dadurch geht von diesen Daten eine geringe Gefahr aus, selbst wenn sie versehentlich ein anderes Gerät als beabsichtigt erreichen sollten.

Bei einer weiteren Ausgestaltung eines erfindungsgemäßen Steuergerätes ist die Resilienzeinheit eingerichtet, die gekapselten Daten mit einer anderen Prüfsumme zu versehen als Daten, die von dem Steuergerät über die Netzwerkschnittstelle in das Netzwerk gesendet werden, wenn von der Überwachungseinheit keine Verletzung der Integrität des Steuergerätes erkannt wird. Alternativ oder zusätzlich ist die Resilienzeinheit eingerichtet, die gekapselten Daten mit einer Prüfsumme zu versehen, die anders kodiert wird als eine Prüfsumme, mit der Daten versehen werden, die von dem Steuergerät über die Netzwerkschnittstelle in das Netzwerk gesendet werden, wenn von der Überwachungseinheit keine Verletzung der Integrität des Steuergerätes erkannt wird. Auch diese Ausgestaltungen eines erfindungsgemäßen Steuergerätes zielen darauf ab, dass die über den Resilienztunnel übertragenen Daten von anderen Geräten in dem Netzwerk nicht als gültig akzeptiert werden, so dass von diesen Daten eine geringe Gefahr ausgeht, selbst wenn sie versehentlich ein anderes Gerät als beabsichtigt erreichen sollten.

Bei einer weiteren Ausgestaltung eines erfindungsgemäßen Steuergerätes ist die Resilienzeinheit eingerichtet, im Fall, dass von der Überwachungseinheit eine Verletzung der Integrität des Steuergerätes erkannt wird, eine kryptografisch geschützte Nachricht zu erzeugen, die über die Netzwerkschnittstelle in das Netzwerk gesendet wird und anzeigt, dass von dem Steuergerät Daten gekapselt über den Resilienztunnel in das Netzwerk gesendet werden. Dadurch liegt eine in dem Netzwerk und auch aus der Ferne überprüfbare verlässliche Information vor, dass das Steuergerät lokal innerhalb des Netzwerkes aktuell nicht mehr oder nur noch eingeschränkt direkt mit anderen Geräten in dem Netzwerk kommunizieren kann.

Bei einer weiteren Ausgestaltung eines erfindungsgemäßen Steuergerätes ist die Resilienzeinheit eingerichtet, die gekapselten Daten kryptografisch zu verschlüsseln. Dadurch wird die geschützte Übertragung der über den Resilienztunnel übertragenen Daten weiter erhöht.

Bei einer weiteren Ausgestaltung eines erfindungsgemäßen Steuergerätes weist die Resilienzeinheit eine Tunnel-Konfigurationskomponente auf, mittels derer die Kapselung und/oder eine Verschlüsselung und/oder eine Zieladresse der über den Resilienztunnel zu sendenden Daten konfigurierbar sind. Unter der Zieladresse wird ein Endpunkt des Resilienztunnels verstanden, an den die Daten über den Resilienztunnel gesendet werden. Die Tunnel-Konfigurationskomponente ermöglicht, eine Konfiguration des Resilienztunnels festzulegen und/oder zu verändern. Die Konfiguration des Resilienztunnels kann die Zieladresse umfassen, die beispielsweise in Form einer IP-Adresse, als DNS-Adresse oder als Unified Resource Locator (URL) oder als Unified Resource Identifier (URI) konfigurierbar ist. Die Konfiguration des Resilienztunnels kann weiterhin ein digitales Zertifikat, eine Zertifikats-Positivliste, oder einen oder mehrere kryptografische Schlüssel aufweisen.

Ein erfindungsgemäßes Netzwerk umfasst
- mehrere erfindungsgemäß ausgebildete Steuergeräte,
- einen Resilienztunnel-Endpunktdienst und
- einen Gerätewiederherstellungsdienst, wobei
- jedes Steuergerät eingerichtet ist, im Fall, dass von der Überwachungseinheit des Steuergerätes eine Verletzung der Integrität des Steuergerätes erkannt wird, die von der Resilienzeinheit gekapselten Daten über den Resilienztunnel an den Resilienztunnel-Endpunktdienst zu senden,
- der Resilienztunnel-Endpunktdienst eingerichtet ist, die von ihm empfangenen gekapselten Daten zu entpacken und auf eine Zulässigkeit zu prüfen und, wenn die entpackten Daten zulässig sind, eine Kommunikation des Gerätewiederherstellungsdienstes mit dem Steuergerät, von dem die gekapselten Daten versendet wurden, über den Resilienztunnel zu ermöglichen, und
- der Gerätewiederherstellungsdienst eingerichtet ist, die Integrität eines Steuergerätes wiederherzustellen.

Das Netzwerk ermöglicht über den Gerätewiederherstellungsdienst eine Wiederherstellung der Integrität eines Steuergerätes. Zu diesem Zweck weist das Netzwerk neben dem Gerätewiederherstellungsdienst einen Resilienztunnel-Endpunktdienst auf, zu dem von einem Steuergerät in dessen Resilienz-Betriebsmodus eine Kommunikationsverbindung über den Resilienztunnel aufgebaut wird. Der Resilienztunnel-Endpunktdienst vermittelt dann eine Kommunikation des Gerätewiederherstellungsdienstes mit dem Steuergerät über den Resilienztunnel, sofern die von dem Steuergerät über den Resilienztunnel an den Resilienztunnel-Endpunktdienst gesendeten Daten von dem Resilienztunnel-Endpunktdienst als zulässig beurteilt werden. Der Resilienztunnel-Endpunktdienst und der Gerätewiederherstellungsdienst können dabei beispielsweise von den Steuergeräten über das Internet erreichbar sein, z.B. in Form eines Dienstes, der in einer öffentlich zugänglichen Cloud-Plattform gehostet ist, oder lokal eingerichtet sein, beispielsweise in einem Fabriknetzwerk oder in einem Enterprise Netzwerk, z. B. auf einer Edge Computing Ausführungsumgebung. Das Wiederherstellen der Integrität eines Steuergerätes durch den Gerätewiederherstellungsdienst kann beispielsweise das Zurücksetzen der Gerätekonfiguration des Steuergerätes auf eine Geräteinitialkonfiguration (Factory Reset), einen Geräteneustart (Reboot), vorzugsweise mit Lesen des Programmcodes aus einem schreibgeschützten Speicherbaustein, z. B. einem Flash-Speicherbaustein, das Einspielen eines Firmware-Updates, das Einspielen von Software-Patches oder das Setzen von Konfigurationsparametern umfassen. Der Gerätewiederherstellungsdienst kann dazu eingerichtet sein, Firmware, Programmcode, Konfigurationsdaten oder Wiederherstellungsanweisungen über den Resilienztunnel an das Gerät zu übertragen. Weiterhin kann das Steuergerät eingerichtet sein, über den Resilienztunnel Diagnosedaten an den Gerätewiederherstellungsdienst zu übertragen. Der Gerätewiederherstellungsdienst kann eingerichtet sein, abhängig von den erhaltenen Diagnosedaten die zum Wiederherstellen der Integrität eines Steuergerätes vorzunehmenden Wiederherstellungsmaßnahmen zu bestimmen oder den Erfolg der angestoßenen Wiederherstellungsmaßnahmen zu prüfen, d. h. zu ermitteln, ob das Steuergerät wieder integer ist, und falls das Steuergerät vom Gerätewiederherstellungsdienst als integer erkannt wird, dem Steuergerät eine vorzugsweise mittels einer kryptografischen Prüfsumme geschützte Resilienztunnel-Aufhebungserlaubnisnachricht bereitzustellen. Die Resilienzeinheit des Steuergerätes kann eingerichtet sein, die Zulässigkeit der empfangenen Resilienztunnel-Aufhebungserlaubnisnachricht abhängig von deren kryptografischer Prüfsumme zu prüfen und abhängig vom Prüfergebnis den Resilienztunnel zu deaktivieren oder abzubauen.

Bei dem erfindungsgemäßen Verfahren zum Übertragen von Daten von einem Steuergerät in ein Netzwerk
- wird von einer Überwachungseinheit des Steuergerätes eine Integrität des Steuergerätes überwacht und
- im Fall, dass von der Überwachungseinheit eine Verletzung der Integrität des Steuergerätes erkannt wird, wird von einer Resilienzeinheit des Steuergerätes zumindest ein Teil von dem Steuergerät über eine Netzwerkschnittstelle des Steuergerätes in das Netzwerk zu sendender Daten gemäß einem Tunnelprotokoll zur Übertragung über einen Resilienztunnel gekapselt und
- die gekapselten Daten werden über den Resilienztunnel in das Netzwerk gesendet.

Bei einer Ausgestaltung des erfindungsgemäßen Verfahrens werden die gekapselten Daten anders kodiert als Daten, die von dem Steuergerät über die Netzwerkschnittstelle in das Netzwerk gesendet werden, wenn von der Überwachungseinheit keine Verletzung der Integrität des Steuergerätes erkannt wird.

Bei einer weiteren Ausgestaltung des erfindungsgemäßen Verfahrens werden die gekapselten Daten mit einer anderen Prüfsumme versehen als Daten, die von dem Steuergerät über die Netzwerkschnittstelle in das Netzwerk gesendet werden, wenn von der Überwachungseinheit keine Verletzung der Integrität des Steuergerätes erkannt wird, und/oder wobei die gekapselten Daten mit einer Prüfsumme versehen werden, die anders kodiert wird als eine Prüfsumme, mit der Daten versehen werden, die von dem Steuergerät über die Netzwerkschnittstelle in das Netzwerk gesendet werden, wenn von der Überwachungseinheit keine Verletzung der Integrität des Steuergerätes erkannt wird.

Bei einer weiteren Ausgestaltung des erfindungsgemäßen Verfahrens wird im Fall, dass von der Überwachungseinheit eine Verletzung der Integrität des Steuergerätes erkannt wird, von der Resilienzeinheit eine kryptografisch geschützte Nachricht erzeugt, die über die Netzwerkschnittstelle in das Netzwerk gesendet wird und anzeigt, dass von dem Steuergerät Daten gekapselt über den Resilienztunnel in das Netzwerk gesendet werden.

Bei einer weiteren Ausgestaltung des erfindungsgemäßen Verfahrens werden die gekapselten Daten kryptografisch verschlüsselt.

Die Merkmale des erfindungsgemäßen Verfahrens und dessen vorgenannter Ausgestaltungen entsprechen oben genannten Merkmalen eines erfindungsgemäßen Steuergerätes und Ausgestaltungen desselben. Daher entsprechen auch die Vorteile des erfindungsgemäßen Verfahrens und dessen vorgenannter Ausgestaltungen oben bereits genannten Vorteilen der entsprechenden Merkmale eines erfindungsgemäßen Steuergerätes und Ausgestaltungen desselben.

Bei einer weiteren Ausgestaltung des erfindungsgemäßen Verfahrens wird im Fall, dass von der Überwachungseinheit eine Verletzung der Integrität des Steuergerätes erkannt wird, ein über den Resilienztunnel übertragener Datenverkehr gefiltert, eine Bandbreite und/oder eine Datenübertragungsrate der Sendung von Daten über die Netzwerkschnittstelle in das Netzwerk begrenzt, und/oder ein Zugriff eines Hauptprozessors des Steuergerätes auf wenigstens eine Hardwarekomponente und/oder auf wenigstens einen Speicherbereich des Steuergerätes gesperrt. Durch diese Maßnahmen werden die Auswirkungen eines Angriffs auf das Steuergerät weiter begrenzt. Beispielsweise dient die Begrenzung der Bandbreite und/oder der Datenübertragungsrate der Sendung von Daten über die Netzwerkschnittstelle in das Netzwerk dazu, eine Überlastung des Netzwerkes oder einzelner Geräte des Netzwerkes durch DoS-Angriffe zu verhindern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockdiagramm eines Ausführungsbeispiels eines Steuergerätes,
- FIG 2: ein Blockdiagramm eines Ausführungsbeispiels eines Netzwerkes mit mehreren Steuergeräten.

Einander entsprechende Teile sind in den Figuren mit denselben Bezugszeichen versehen.

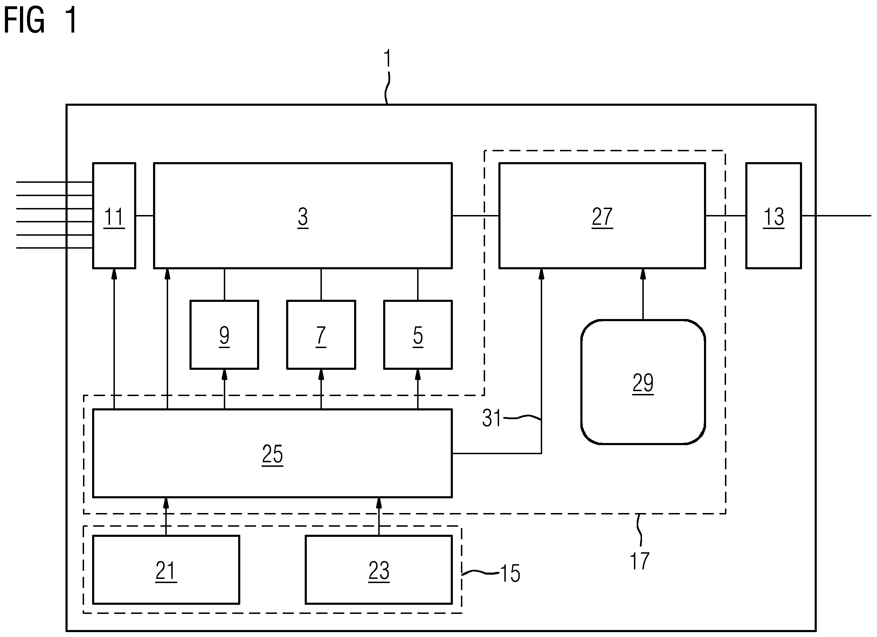

FIG 1 zeigt ein Blockdiagramm eines Ausführungsbeispiels eines erfindungsgemäßen Steuergerätes 1. Das Steuergerät 1 umfasst einen Hauptprozessor 3, einen Programm- und Konfigurationsspeicher 5, einen Arbeitsspeicher 7, ein Sicherheitselement 9, eine Ein-Ausgabeschnittstelle 11 zum Verbinden von Sensoren und Aktuatoren mit dem Steuergerät 1, eine Netzwerkschnittstelle 13, eine Überwachungseinheit 15 und eine Resilienzeinheit 17.

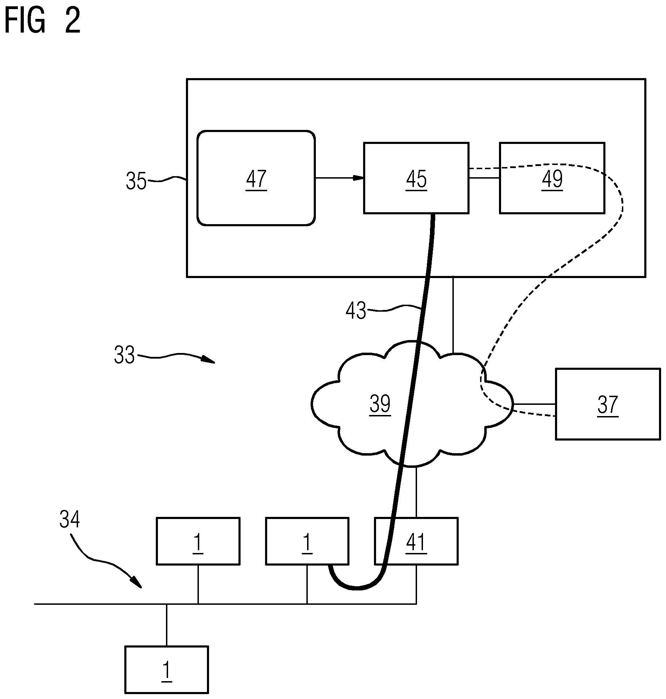

Die Netzwerkschnittstelle 13 ist eingerichtet, eine Netzwerkkommunikation des Steuergerätes 1 mit einem Netzwerk 33 (siehe FIG 2) durchzuführen. Beispielsweise umfasst die Netzwerkschnittstelle 13 eine Ethernet-Schnittstelle, eine WLAN-Schnittstelle, eine Mobilfunk-Schnittstelle und/oder eine Ultra-Wide-Band-Schnittstelle. Die Netzwerkschnittstelle 13 kann allgemein als drahtgebundene Schnittstelle, als optische Schnittstelle, als Funkschnittstellstelle oder als Drahtlos-Kommunikationsschnittstelle realisiert sein.

Die Überwachungseinheit 15 ist eingerichtet, eine Integrität des Steuergerätes 1 zu überwachen. Im in FIG 1 gezeigten Ausführungsbeispiel umfasst die Überwachungseinheit 15 zu diesem Zweck eine Runtime-Health-Check-Komponente 21 und einen kryptografisch rücksetzgeschützten Watchdog (authenticated Watchdog) 23. Die Runtime-Health-Check-Komponente 21 ist eingerichtet, zur Laufzeit die Integrität des Steuergerätes 1 zu überwachen. Der authenticated Watchdog 23 kann von außen kryptografisch geschützt zurückgesetzt werden und signalisiert eine Integritätsverletzung, wenn er nicht rechtzeitig zurückgesetzt wird. Ferner kann die Überwachungseinheit 15 eine Geräte-Management-Funktionalität aufweisen, über die durch ein Geräte-Management-System von außen eine Integritätsverletzung signalisiert werden kann.

Die Resilienzeinheit 17 umfasst eine Resilienzmodus-Aktivierungskomponente 25, eine Kapselungskomponente 27 und eine Tunnel-Konfigurationskomponente 29. Die Resilienzmodus-Aktivierungskomponente 25 ist eingerichtet, im Fall, dass von der Überwachungseinheit 15 eine Verletzung der Integrität des Steuergerätes 1 erkannt wird, einen Resilienz-Betriebsmodus des Steuergerätes 1 zu aktivieren. Zur Aktivierung des Resilienz-Betriebsmodus sendet die Resilienzmodus-Aktivierungskomponente 25 ein Steuersignal 31 an die Kapselungskomponente 27. Ferner kann die Resilienzmodus-Aktivierungskomponente 25 eingerichtet sein, bei der Aktivierung des Resilienz-Betriebsmodus eine kryptografisch geschützte Nachricht zu erzeugen, die über die Netzwerkschnittstelle 13 in das Netzwerk 33 gesendet wird und anzeigt, dass der Resilienz-Betriebsmodus des Steuergerätes 1 aktiviert ist. Optional stößt die Resilienzmodus-Aktivierungskomponente 25 bei der Aktivierung des Resilienz-Betriebsmodus weitere Maßnahmen an, beispielsweise eine Deaktivierung der Ein-Ausgabeschnittstelle 11, ein Anhalten des Hauptprozessors 3 oder ein Erzeugen eines Interrupt-Signals und/oder ein Einspielen eines Wiederherstellungs-Abbilds (Wiederherstellungs-Image) im Programm- und Konfigurationsspeicher 5.

Die Kapselungskomponente 27 ist eingerichtet, in dem Resilienz-Betriebsmodus nach Erhalt des Steuersignals 31 zumindest einen Teil von dem Steuergerät 1 über die Netzwerkschnittstelle 13 in das Netzwerk 33 zu sendender Daten gemäß einem Tunnelprotokoll zur Übertragung über einen Resilienztunnel 43 (siehe FIG 2) zu kapseln, bevor die gekapselten Daten über den Resilienztunnel 43 in das Netzwerk 33 gesendet werden. Die gekapselten Daten umfassen zumindest alle über die Netzwerkschnittstelle 13 in das Netzwerk 33 zu sendenden Daten, die von durch den Hauptprozessor 3 ausgeführter Software erzeugt werden, sie können aber auch weitere oder alle von dem Steuergerät 1 in das Netzwerk 33 zu sendenden Daten umfassen. Durch die Übertragung der gekapselten Daten über den Resilienztunnel 43 koppelt sich das Steuergerät 1 selbst von der Möglichkeit ab, regulär über die Netzwerkschnittstelle 13 zu kommunizieren.

Neben den bereits genannten können in dem Resilienz-Betriebsmodus weitere Maßnahmen auf dem Steuergerät 1 ergriffen werden. Beispielsweise werden in dem Resilienz-Betriebsmodus die gekapselten Daten anders kodiert als Daten, die von dem Steuergerät 1 üblicherweise (das heißt, wenn der Resilienz-Betriebsmodus nicht aktiviert ist) über die Netzwerkschnittstelle 13 in das Netzwerk 33 gesendet werden. Dabei werden die über den Resilienztunnel 43 zu sendenden Daten beispielsweise umkodiert, wofür eine XOR-Verknüpfung mit einem bestimmten Bitmuster wie 1111 1111 oder 0101 0101 oder 1010 1010 oder 1001 0110 verwendet wird. Alternativ oder zusätzlich werden die gekapselten Daten mit einer anderen Prüfsumme versehen als Daten, die von dem Steuergerät 1 üblicherweise über die Netzwerkschnittstelle 13 in das Netzwerk 33 gesendet werden, oder die gekapselten Daten werden mit einer Prüfsumme versehen, die anders kodiert wird als eine Prüfsumme, mit der Daten versehen werden, die von dem Steuergerät 1 üblicherweise über die Netzwerkschnittstelle 13 in das Netzwerk 33 gesendet werden. Alternativ oder zusätzlich werden die gekapselten Daten kryptografisch verschlüsselt.

Alternativ oder zusätzlich erfolgt im Resilienz-Betriebsmodus beispielsweise eine Filterung des Datenverkehrs, der über den Resilienztunnel 43 übertragen wird, eine Begrenzung der Bandbreite oder der Datenübertragungsrate der Sendung von Daten über die Netzwerkschnittstelle 13 in das Netzwerk 33 (um DoS-Angriffe zu vermeiden) und/oder ein Sperren des Zugriffs durch den Hauptprozessor 3 auf bestimmte Hardware-Komponenten des Steuergerätes 1 und/oder auf bestimmte Speicherbereiche.

Die Tunnel-Konfigurationskomponente 29 ist eingerichtet, den Resilienztunnel 43 zu konfigurieren. Die Konfiguration des Resilienztunnels 43 umfasst beispielsweise das zu verwendende Tunnelprotokoll, einen Endpunkt des Resilienztunnels 43, beispielsweise in Form einer Zieladresse für die über den Resilienztunnel 43 zu sendenden Daten, und/oder einen kryptographischen Schlüssel zum Verschlüsseln dieser Daten. Bei dem kryptographischen Schlüssel kann es sich um einen symmetrischen Schlüssel (pre-shared key) oder um einen privaten Schlüssel mit eigenem Zertifikat und ein Zertifikat des Endpunktes des Resilienztunnels 43 handeln. Die Tunnel-Konfigurationskomponente 29 kann eine Konfiguration des Resilienztunnels 43 fest vorgeben oder die Möglichkeit bieten, den Resilienztunnel 43 zu konfigurieren.

FIG 2 zeigt ein Blockdiagramm eines Ausführungsbeispiels eines erfindungsgemäßen Netzwerkes 33. Das Netzwerk 33 umfasst mehrere Steuergeräte 1, einen Resilienztunnel-Endpunktdienst 35 und einen Gerätewiederherstellungsdienst 37.

Die Steuergeräte 1 sind jeweils wie das anhand von FIG 1 beschriebene Steuergerät 1 ausgebildet und können in ihrem normalen Betriebsmodus miteinander über ein Teilnetzwerk 34 des Netzwerkes 33 kommunizieren. Der Resilienztunnel-Endpunktdienst 35 und der Gerätewiederherstellungsdienst 37 sind aus dem Teilnetzwerk 34 über ein Kommunikationsmedium 39 erreichbar, das über ein Gateway 41 mit dem Teilnetzwerk 34 verbunden ist. Das Kommunikationsmedium 39 ist beispielsweise das Internet und der Resilienztunnel-Endpunktdienst 35 und der Gerätewiederherstellungsdienst 37 sind über das Internet beispielsweise in Form eines Dienstes erreichbar, der in einer öffentlich zugänglichen Cloud-Plattform gehostet ist. Alternativ sind der Resilienztunnel-Endpunktdienst 35 und der Gerätewiederherstellungsdienst 37 lokal eingerichtet, beispielsweise in einem Fabriknetzwerk oder in einem Enterprise Netzwerk, z. B. auf einer Edge Computing Ausführungsumgebung.

Die Steuergeräte 1 sind jeweils eingerichtet, in dem Resilienz-Betriebsmodus die von ihrer Resilienzeinheit 17 gekapselten Daten über einen Resilienztunnel 43 an den Resilienztunnel-Endpunktdienst 35 zu senden. In FIG 2 ist beispielhaft der Fall dargestellt, dass sich eines der Steuergeräte 1 in dem Resilienz-Betriebsmodus befindet. Im Fall, dass alle von diesem Steuergerät 1 in das Netzwerk 33 zu sendenden Daten über den Resilienztunnel 43 gesendet werden, kann dieses Steuergerät 1 technisch nur noch über den Resilienztunnel 43 mit dem Resilienztunnel-Endpunktdienst 35, nicht jedoch mit den anderen Steuergeräten 1 in dem Teilnetzwerk 34 kommunizieren und kann auch nicht die Kommunikation auf dem Teilnetzwerk 34 mithören. Der Resilienztunnel 43 verläuft über das Gateway 41 und das Kommunikationsmedium 39 zwischen dem Steuergerät 1 und dem Resilienztunnel-Endpunktdienst 35.

Der Resilienztunnel-Endpunktdienst 35 entpackt die über den Resilienztunnel 43 übertragenen Daten. Wenn diese Daten kryptografisch verschlüsselt sind, umfasst das Entpacken auch ein Entschlüsseln der Daten. Zu diesem Zweck weist der Resilienztunnel-Endpunktdienst 35 eine Tunnelendpunkteinheit 45 und eine Tunnelendpunkt-Konfigurationskomponente 47 für die Tunnelendpunkteinheit 45 auf. Die entpackten Daten werden durch einen Netzwerkverkehr-Filter 49 des Resilienztunnel-Endpunktdienstes auf Zulässigkeit überprüft. Soweit die Kommunikation zulässig ist, wird von dem Resilienztunnel-Endpunktdienst 35 über den Resilienztunnel 43 eine Kommunikation des Gerätewiederherstellungsdienstes 37 mit dem Steuergerät 1 ermöglicht, von dem die gekapselten Daten versendet wurden. Der Gerätewiederherstellungsdienst 37 ist eingerichtet, die Integrität eines Steuergerätes 1 (soweit möglich) wiederherzustellen und wird beispielsweise von einem Geräte-Management-System ausgeführt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffs sind Personen mit männlicher, weiblicher oder anderer Geschlechteridentität mit umfasst.

### Bezugszeichenliste

- 1: Steuergerät
- 3: Hauptprozessor
- 5: Programm- und Konfigurationsspeicher
- 7: Arbeitsspeicher
- 9: Sicherheitselement
- 11: Ein-Ausgabeschnittstelle
- 13: Netzwerkschnittstelle
- 15: Überwachungseinheit
- 17: Resilienzeinheit
- 21: Runtime-Health-Check-Komponente
- 23: authenticated Watchdog
- 25: Resilienzmodus-Aktivierungskomponente
- 27: Kapselungskomponente
- 29: Tunnel-Konfigurationskomponente
- 31: Steuersignal
- 33: Netzwerk
- 34: Teilnetzwerk
- 35: Resilienztunnel-Endpunktdienst
- 37: Gerätewiederherstellungsdienst
- 39: Kommunikationsmedium
- 41: Gateway
- 43: Resilienztunnel
- 45: Tunnelendpunkteinheit
- 47: Tunnelendpunkt-Konfigurationskomponente
- 49: Netzwerkverkehr-Filter

## Patentansprüche

1. Steuergerät (1), umfassend
- eine Netzwerkschnittstelle (13), die eingerichtet ist, eine Netzwerkkommunikation des Steuergerätes (1) mit einem Netzwerk (33) durchzuführen,
- eine Überwachungseinheit (15), die eingerichtet ist, eine Integrität des Steuergerätes (1) zu überwachen, und
- eine Resilienzeinheit (17), die eingerichtet ist, im Fall, dass von der Überwachungseinheit (15) eine Verletzung der Integrität des Steuergerätes (1) erkannt wird, zumindest einen Teil von dem Steuergerät (1) über die Netzwerkschnittstelle (13) in das Netzwerk (33) zu sendender Daten gemäß einem Tunnelprotokoll zur Übertragung über einen Resilienztunnel (43) zu kapseln, bevor die gekapselten Daten über den Resilienztunnel (43) in das Netzwerk (33) gesendet werden.

2. Steuergerät (1) nach Anspruch 1 mit einem Hauptprozessor (3), wobei die von der Resilienzeinheit (17) gekapselten Daten zumindest alle über die Netzwerkschnittstelle (13) in das Netzwerk (33) zu sendenden Daten umfassen, die von durch den Hauptprozessor (3) ausgeführter Software erzeugt werden.

3. Steuergerät (1) nach Anspruch 1 oder 2, wobei die Resilienzeinheit (17) eingerichtet ist, zu veranlassen, dass die gekapselten Daten anders kodiert werden als Daten, die von dem Steuergerät (1) über die Netzwerkschnittstelle (13) in das Netzwerk (33) gesendet werden, wenn von der Überwachungseinheit (15) keine Verletzung der Integrität des Steuergerätes (1) erkannt wird.

4. Steuergerät (1) nach einem der vorhergehenden Ansprüche, wobei die Resilienzeinheit (17) eingerichtet ist, die gekapselten Daten mit einer anderen Prüfsumme zu versehen als Daten, die von dem Steuergerät (1) über die Netzwerkschnittstelle (13) in das Netzwerk (33) gesendet werden, wenn von der Überwachungseinheit (15) keine Verletzung der Integrität des Steuergerätes (1) erkannt wird.

5. Steuergerät (1) nach einem der vorhergehenden Ansprüche, wobei die Resilienzeinheit (17) eingerichtet ist, die gekapselten Daten mit einer Prüfsumme zu versehen, die anders kodiert wird als eine Prüfsumme, mit der Daten versehen werden, die von dem Steuergerät (1) über die Netzwerkschnittstelle (13) in das Netzwerk (33) gesendet werden, wenn von der Überwachungseinheit (15) keine Verletzung der Integrität des Steuergerätes (1) erkannt wird.

6. Steuergerät (1) nach einem der vorhergehenden Ansprüche, wobei die Resilienzeinheit (17) eingerichtet ist, im Fall, dass von der Überwachungseinheit (15) eine Verletzung der Integrität des Steuergerätes (1) erkannt wird, eine kryptografisch geschützte Nachricht zu erzeugen, die über die Netzwerkschnittstelle (13) in das Netzwerk (33) gesendet wird und anzeigt, dass von dem Steuergerät (1) Daten gekapselt über den Resilienztunnel (43) in das Netzwerk (33) gesendet werden.

7. Steuergerät (1) nach einem der vorhergehenden Ansprüche, wobei die Resilienzeinheit (17) eingerichtet ist, die gekapselten Daten kryptografisch zu verschlüsseln.

8. Steuergerät (1) nach einem der vorhergehenden Ansprüche, wobei die Resilienzeinheit (17) eine Tunnel-Konfigurationskomponente (29) aufweist, mittels derer die Kapselung und/oder eine Verschlüsselung und/oder eine Zieladresse der über den Resilienztunnel (43) zu sendenden Daten konfigurierbar sind.

9. Netzwerk (33), umfassend
- mehrere Steuergeräte (1), die jeweils gemäß einem der vorhergehenden Ansprüche ausgebildet sind,
- einen Resilienztunnel-Endpunktdienst (35) und
- einen Gerätewiederherstellungsdienst (37), wobei
- jedes Steuergerät (1) eingerichtet ist, im Fall, dass von der Überwachungseinheit (15) des Steuergerätes (1) eine Verletzung der Integrität des Steuergerätes (1) erkannt wird, die von der Resilienzeinheit (17) gekapselten Daten über den Resilienztunnel (43) an den Resilienztunnel-Endpunktdienst (35) zu senden,
- der Resilienztunnel-Endpunktdienst (35) eingerichtet ist, die von ihm empfangenen gekapselten Daten zu entpacken und auf eine Zulässigkeit zu prüfen und, wenn die entpackten Daten zulässig sind, eine Kommunikation des Gerätewiederherstellungsdienstes (37) mit dem Steuergerät (1), von dem die gekapselten Daten versendet wurden, über den Resilienztunnel (43) zu ermöglichen, und
- der Gerätewiederherstellungsdienst (37) eingerichtet ist, die Integrität eines Steuergerätes (1) wiederherzustellen.

10. Verfahren zum Übertragen von Daten von einem Steuergerät (1) in ein Netzwerk (33), wobei
- von einer Überwachungseinheit (15) des Steuergerätes (1) eine Integrität des Steuergerätes (1) überwacht wird und
- im Fall, dass von der Überwachungseinheit (15) eine Verletzung der Integrität des Steuergerätes (1) erkannt wird, von einer Resilienzeinheit (17) des Steuergerätes (1) zumindest ein Teil von dem Steuergerät (1) über eine Netzwerkschnittstelle (13) des Steuergerätes (1) in das Netzwerk (33) zu sendender Daten gemäß einem Tunnelprotokoll zur Übertragung über einen Resilienztunnel (43) gekapselt wird, bevor die gekapselten Daten über den Resilienztunnel (43) in das Netzwerk (33) gesendet werden.

11. Verfahren nach Anspruch 10, wobei die gekapselten Daten anders kodiert werden als Daten, die von dem Steuergerät (1) über die Netzwerkschnittstelle (13) in das Netzwerk (33) gesendet werden, wenn von der Überwachungseinheit (15) keine Verletzung der Integrität des Steuergerätes (1) erkannt wird.

12. Verfahren nach Anspruch 10 oder 11, wobei die gekapselten Daten mit einer anderen Prüfsumme versehen werden als Daten, die von dem Steuergerät (1) über die Netzwerkschnittstelle (13) in das Netzwerk (33) gesendet werden, wenn von der Überwachungseinheit (15) keine Verletzung der Integrität des Steuergerätes (1) erkannt wird, und/oder wobei die gekapselten Daten mit einer Prüfsumme versehen werden, die anders kodiert ist als eine Prüfsumme, mit der Daten versehen werden, die von dem Steuergerät (1) über die Netzwerkschnittstelle (13) in das Netzwerk (33) gesendet werden, wenn von der Überwachungseinheit (15) keine Verletzung der Integrität des Steuergerätes (1) erkannt wird.

13. Verfahren nach einem der Ansprüche 10 bis 12, wobei im Fall, dass von der Überwachungseinheit (15) eine Verletzung der Integrität des Steuergerätes (1) erkannt wird, von der Resilienzeinheit (17) eine kryptografisch geschützte Nachricht erzeugt wird, die über die Netzwerkschnittstelle (13) in das Netzwerk (33) gesendet wird und anzeigt, dass von dem Steuergerät (1) Daten gekapselt über den Resilienztunnel (43) in das Netzwerk (33) gesendet werden.

14. Verfahren nach einem der Ansprüche 10 bis 13, wobei die gekapselten Daten kryptografisch verschlüsselt werden.

15. Verfahren nach einem der Ansprüche 10 bis 14, wobei im Fall, dass von der Überwachungseinheit (15) eine Verletzung der Integrität des Steuergerätes (1) erkannt wird, ein über den Resilienztunnel (43) übertragener Datenverkehr gefiltert wird, eine Bandbreite und/oder eine Datenübertragungsrate der Sendung von Daten über die Netzwerkschnittstelle (13) in das Netzwerk (33) begrenzt wird, und/oder ein Zugriff eines Hauptprozessors (3) des Steuergerätes (1) auf wenigstens eine Hardwarekomponente und/oder auf wenigstens einen Speicherbereich des Steuergerätes (1) gesperrt wird.
